# FASCICULE DE BREVET EUROPEEN

(11) **EP 4 281 654 B1**
(45) Date de publication et mention de la délivrance du brevet: **27.08.2025**
(21) Numéro de dépôt: 22705427.7
(22) Date de dépôt: 20.01.2022
(51) Int. Cl.: F01D 25/12, F01D 25/16

(54) **COURONNE DE VENTILATION DU SUPPORT DE PALIER ARRIÈRE D'UNE TURBOMACHINE D'AÉRONEF**
BELÜFTUNGSRING FÜR DAS HINTERE LAGERTRÄGERELEMENT EINES FLUGZEUGTURBINENTRIEBWERKS
VENTILATION RING FOR THE REAR BEARING SUPPORT MEMBER OF AN AIRCRAFT TURBINE ENGINE

(30) Priorité: 21.01.2021 FR 2100558
(43) Date de publication de la demande: 29.11.2023
(73) Titulaire: SAFRAN AIRCRAFT ENGINES, 75015 Paris (FR)
(72) Inventeur: VOIRON, Mickaël, 77550 Moissy-Cramayel (FR); GARNIER, Fabien, Stéphane, 77550 Moissy-Cramayel (FR); OVAERE, Nicolas, 77550 Moissy-Cramayel (FR)
(74) Mandataire: Regimbeau
(86) Numéro de dépôt international: PCT/FR2022/050109
(87) Numéro de publication internationale: WO 2022/157456

(56) Documents cités:
- FR-A1- 3 005 099
- FR-A1- 3 053 728
- US-A1- 2015 147 157

## Description

### DOMAINE DE L'INVENTION

L'invention concerne les turbomachines d'aéronef, en particulier la couronne de ventilation du support du palier arrière de la turbomachine.

### ETAT DE LA TECHNIQUE

Dans un turboréacteur d'avion, l'arbre du rotor est supporté par des paliers reliés au stator. L'un des paliers est situé à l'arrière.

Ce palier est entouré par une couronne qui forme un circuit pour un liquide de lubrification et de refroidissement tel que de l'huile. Elle forme aussi, en périphérie de ce circuit de liquide, un circuit de ventilation.

A cette fin, elle comprend des parois tubulaires s'étendant en regard les unes des autres suivant une direction radiale à un axe de la machine et des parois d'entretoise tronconiques, ou brides, reliant les parois tubulaires deux à deux. Les parois d'entretoise présentent des orifices pour le passage de l'air de ventilation.

Un exemple est décrit dans la demande de brevet FR3053728A1.

Compte tenu de la forme complexe de la couronne, il est intéressant de la réaliser par fabrication additive. Toutefois, ce mode de fabrication ne permet pas de réaliser facilement et de façon fiable les orifices des parois d'entretoise. En effet, il existe un fort risque d'effondrement local de la pièce en cours de fabrication avec la poudre, compte tenu de sa géométrie et du nombre d'orifices à réaliser. Or un tel effondrement nécessite d'interrompre la fabrication et est source de retards.

C'est la raison pour laquelle il est préférable de réaliser la pièce par fabrication additive sans les orifices, c'est-à-dire en réalisant des supports occupant les orifices, et de réaliser les orifices dans un deuxième temps par usinage.

Toutefois, cette dernière méthode engendre ses propres inconvénients. En effet, elle nécessite une reprise en usinage, ce qui constitue une deuxième étape de fabrication. De plus, cet usinage a lieu dans des zones difficiles d'accès, situées entre les parois tubulaires. Cette contrainte sur l'accès entraine à son tour une contrainte sur la forme des orifices : un usinage circulaire de l'orifice dans une direction parallèle à l'axe du tronc de cône de la paroi conduit à un orifice de forme ovale (ou elliptique) de sorte qu'il est difficile d'obtenir une autre forme. En outre, la fabrication additive sans réaliser les orifices complique l'opération de dépoudrage qui consiste à éliminer de la pièce obtenue la poudre résiduelle répandue lors de la fabrication.

Un but de l'invention est donc de faciliter l'obtention de la couronne par fabrication additive afin d'éviter le risque d'effondrement, la reprise d'usinage et l'utilisation de supports et de ne pas compromettre le dépoudrage.

### EXPOSE DE L'INVENTION

A cet effet, on prévoit selon l'invention une couronne de ventilation pour support de palier de turbomachine d'aéronef selon la revendication 1.

Ainsi, on prend en compte la présence des parois tubulaires pour définir une géométrie d'orifices adaptée à la fabrication additive. Pour ce faire, le ou les orifices sont définis de manière à ce que leur ouverture et/ou leur fermeture se situent dans la ou les bases, de préférence rayonnées, des parois adjacentes. On a ainsi une bonne continuité lors de la fabrication de la pièce dans la zone de jonction des orifices avec la ou les parois tubulaires. En effet, la base permet une construction progressive d'une portion d'extrémité de l'orifice sur plusieurs couches compte tenu de l'inclinaison de la paroi d'entretoise, en général tronconique. En même temps, l'autre portion d'extrémité de l'orifice se construit à distance, ce qui permet d'avoir une zone de raccordement entre les deux portions à la fin de la construction de l'orifice.

La solution mise en œuvre consiste donc à modifier la géométrie des orifices pour faciliter la fabrication de la pièce et éviter l'utilisation de supports dans une zone peu accessible. On tire ainsi profit de la géométrie particulière de la pièce pour construire les orifices de ventilation sans risque d'effondrement.

L'invention permet de réduire la durée et le coût des opérations post fabrication additive (dépoudrage, usinage, etc.). Elle permet de :
- faciliter la fermeture du contour des orifices,
- faciliter le dépoudrage de la pièce si besoin par l'ouverture formée sur toute la largeur de la cavité (de paroi à paroi) par l'orifice,
- supprimer les supports de fabrication, et
- réduire le risque d'arrêt de la machine lors de la fabrication.

La couronne pourra présenter en outre au moins l'une quelconque des caractéristiques suivantes :
- la base présente au moins une face à profil arrondi concave formant une transition d'une face de la paroi tubulaire à une face de la paroi d'entretoise ;
- l'orifice s'étend dans la base des deux parois tubulaires ;
- la paroi d'entretoise présente plusieurs orifices s'étendant dans la base de la paroi tubulaire ou dans la base des deux parois tubulaires ;
- les parois d'entretoise sont au moins au nombre de deux et chacune présente plusieurs orifices ;
- les orifices des parois d'entretoise sont disposés en quinconce ;
- les orifices des parois d'entretoise sont disposés en coïncidence ;
- les parois tubulaires sont au moins au nombre de quatre, et
- l'une des parois d'entretoise étant à plus grande distance de l'axe que l'autre paroi d'entretoise ou que les autres parois d'entretoise, des orifices inférieurs parmi les orifices s'étendent dans une partie inférieure de la paroi d'entretoise la plus distante de l'axe, les orifices inférieurs se trouvant tous dans une seule parmi des moitiés gauche et droite de la paroi d'entretoise par référence à l'axe.

Dans ce dernier cas en effet, il est intéressant d'ajouter des orifices au côté opposé au sens du flux d'air dans la couronne pour éviter d'éventuelles projections d'air huilé. Ces orifices n'ont pas de pendant de l'autre côté de la couronne.

On prévoit aussi selon l'invention une turbomachine d'aéronef comprenant une couronne selon l'invention.

On prévoit enfin selon l'invention un procédé de fabrication d'une couronne selon l'invention par fabrication additive, notamment par fusion par faisceau laser.

### DESCRIPTION DES FIGURES

Nous allons maintenant présenter un mode de réalisation de l'invention et une variante à titre d'exemples non-limitatifs à l'appui des dessins sur lesquels :
- la figure 1 est une vue en coupe axiale d'un turboréacteur d'aéronef selon un mode de réalisation de l'invention ;
- la figure 2 est une vue en perspective et en coupe de certaines pièces de la partie arrière du turboréacteur de la figure précédente ;
- la figure 3 est une vue en section de la couronne du palier arrière du turboréacteur des figures précédentes montrant le trajet de l'air et de l'huile ;
- la figure 4 est une vue en élévation depuis l'avant de la couronne de la figure précédente ;
- les figures 5 à 7 sont des vues partiellement en coupe et avec arrachement de la couronne montrant les parois d'entretoise ;
- la figure 8 est une vue à plus grande échelle d'une partie de la figure 7 illustrant le processus de construction d'un orifice de la paroi en fabrication additive, et
- la figure 9 est une vue analogue à la figure 5 illustrant une variante.

Les figures illustrent un turboréacteur 2 d'avion qui constitue un mode de réalisation de la turbomachine selon l'invention. Le turboréacteur 1 forme ici une turbomachine à double flux et double corps, mais l'invention n'est pas limitée à cet agencement. Elle s'applique notamment aussi à un turboréacteur à simple flux. La turbomachine comprend un stator 6 et un rotor 4 monté mobile à rotation par rapport au stator autour d'un axe principal X-X.

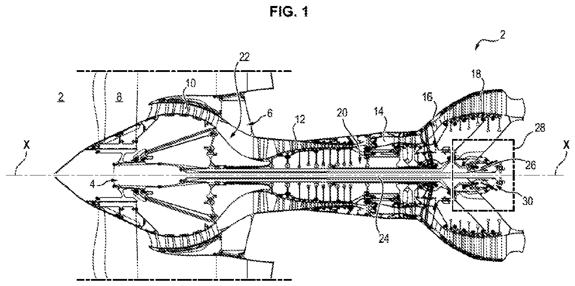

Elle comprend d'amont en aval, donc de gauche à droite sur la figure 1, une soufflante 8, un compresseur basse pression 10, un compresseur haute pression 12, une chambre de combustion 14, une turbine haute pression 16 et une turbine basse pression 18. Ces éléments, à l'exception de la soufflante, font partie d'une partie centrale 20 du turboréacteur. Leurs parties mobiles à rotation autour de l'axe X-X forment le rotor.

Le compresseur haute pression 12, la chambre de combustion 14 et la turbine haute pression 16 forment un corps à haute pression qui, conjointement avec le compresseur basse pression 10 et la turbine basse pression 18, définissent une veine principale 22 d'écoulement d'air.

Une nacelle entoure la soufflante 8 et la partie centrale 20 de façon à former un compartiment de soufflante et à définir une veine secondaire d'écoulement d'air.

Le rotor comprend un arbre 24 qui est en l'espèce un arbre double. L'arbre comprend un arbre externe par lequel la turbine basse pression 18 est reliée au compresseur basse pression 10 et à la soufflante 8. Il comprend aussi un arbre interne s'étendant à l'intérieur de l'arbre externe et par lequel la turbine haute pression 16 est reliée au compresseur haute pression 12.

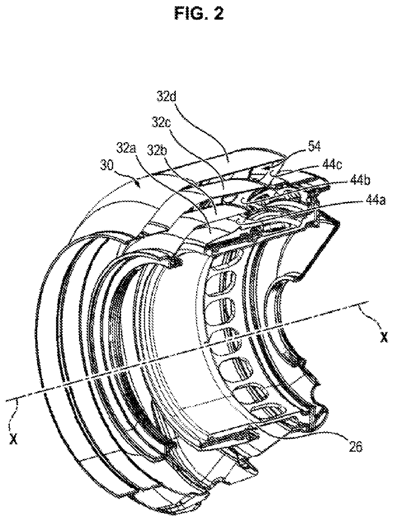

L'arbre 24 est relié au stator en étant supporté par plusieurs paliers de rotation qui sont en l'espèce au nombre de cinq. On s'intéresse dans la suite au support 26 du palier arrière qui est le palier situé le plus en arrière, c'est-à-dire le plus en aval du flux d'air. Le palier est un palier à roulement et n'a pas été illustré en détail. Le support 26 est illustré dans l'encadré 28 sur la figure 1 et plus en détails sur la figure 2. Il est supporté lui-même par une couronne de refroidissement 30 qui entoure le support.

La couronne 30 comprend des parois tubulaires 32a-d qui sont en l'espèce au nombre de quatre. Les parois ont chacune une forme tubulaire ou une forme de manchon. Elles sont coaxiales d'axe X-X. Les parois se faisant suite dans la succession s'étendent en regard l'une de l'autre. La paroi 32a est la plus interne et est en contact avec le support de palier 26. La paroi 32d est la plus externe et celle qui s'étend à la plus grande distance de l'axe.

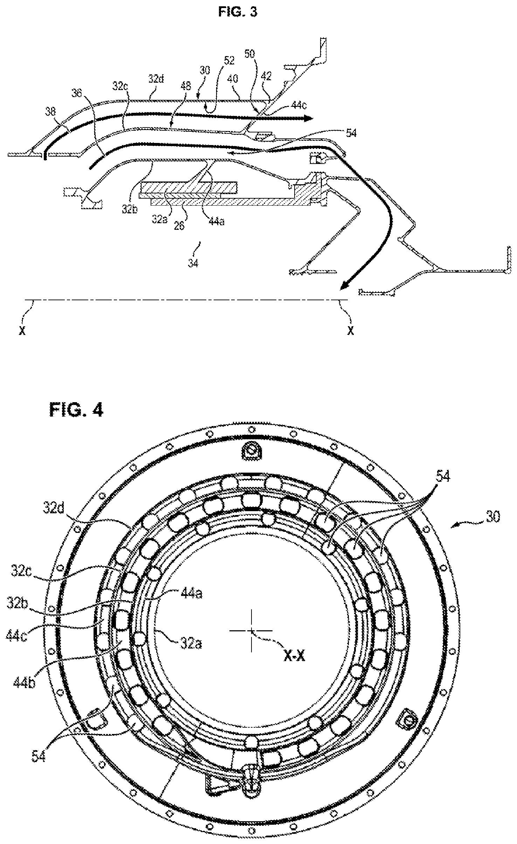

Les parois les plus internes 32a, b forment entre elles et avec le palier 26 un conduit tubulaire de passage d'un liquide de refroidissement et de lubrification tel que de l'huile. Le circuit de l'huile a été illustré par la flèche 34 sur la figure 3. Les parois 32b, 32c forment entre elles un conduit tubulaire de ventilation. Il en est de même pour les parois 32c, 32d les plus externes. Les deux circuits de ventilation ont été illustrés par les flèches 36 et 38 sur la figure.

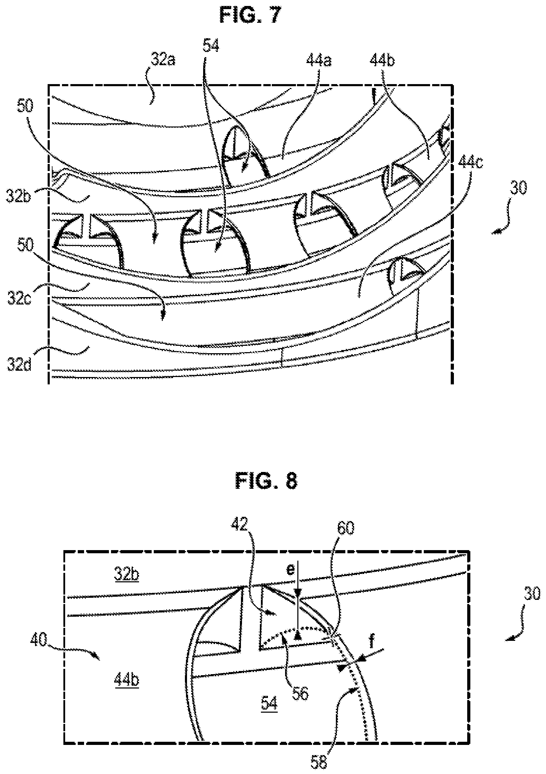

Chaque paroi tubulaire 32a-d est ici constituée par une partie principale 40 et une base 42 présentant une épaisseur e plus grande qu'une épaisseur f de la partie principale. Ces épaisseurs ont été illustrée à la figure 8.

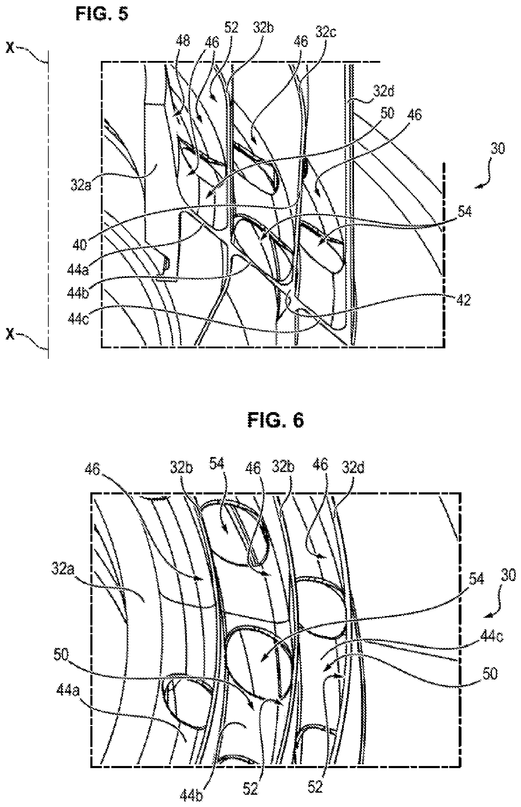

La couronne 30 comprend aussi des parois d'entretoise 44a-c, ou brides, reliant les parois tubulaires 32a-d deux à deux. Les parois d'entretoise sont ici au nombre de trois. Ainsi la paroi d'entretoise 44a s'étend entre les parois tubulaires 32a et 32b, et ainsi de suite. Les parois d'entretoise 44a-c sont disposées ici dans le prolongement les unes des autres, comme on le voit sur la figure 5. Elles sont donc formées géométriquement par le même tronc de cône. Le diamètre le plus large du tronc de cône se trouve vers l'aval, le cône ayant pour axe l'axe X-X.

Comme on le voit par exemple sur la figure 5, la base de la paroi tubulaire 32a la plus proche de l'axe présente une face 46 à profil arrondi concave formant une transition depuis une face externe 48 de la paroi tubulaire à une face arrière 50 de la paroi d'entretoise. La base comprend ainsi une zone rayonnée.

De même, la base de la paroi tubulaire 32b présente une face 46 à profil arrondi concave formant une transition de la face arrière 50 à une face interne 52 de la paroi, située en regard de la face externe 48 de la paroi tubulaire 32a. Il en va de même à la jonction de la base de la paroi 32c avec la paroi d'entretoise 44b et à la jonction de la base de la paroi 32d avec la paroi d'entretoise 44c, et plus généralement pour les jonctions de toutes les bases avec toutes les parois d'entretoise dans le présent exemple.

Chacune des parois d'entretoise 44a-c présente plusieurs orifices 54 pour le passage de l'huile (pour la paroi 44a) et pour le passage de l'air (pour les parois 44b et 44c).

Dans le présent exemple, les orifices 54 sont au nombre de 10 dans la paroi d'entretoise la plus interne 42a, au nombre de 19 dans la paroi d'entretoise médiane 44b et au nombre de 14 dans la paroi d'entretoise la plus externe 44c. Bien entendu, ces nombres ne sont pas limitatifs. Sur chaque paroi d'entretoise, les orifices 54 sont identiques, s'étendent à la même distance de l'axe et sont équidistants mais ne s'étendent pas sur l'ensemble de la paroi. La disposition des orifices est notamment illustrée à la figure 4.

En outre, sur chaque paroi d'entretoise, chaque orifice 54 s'étend jusque dans la base des deux parois tubulaires contiguës à la paroi d'entretoise. Par exemple, sur la paroi d'entretoise 44a la plus proche de l'axe, les orifices 54 s'étendent dans la base des parois 32a et 32b.

Dans ces conditions, on observe que les deux extrémités de chaque orifice sont formées par des épaisseurs de matière plus importante que sa zone médiane.

Comme on le voit sur la figure 4, dans le présent exemple, les orifices 54 sont disposés en quinconce. Autrement dit, les orifices 54 de la paroi d'entretoise médiane 44b sont décalés par rapport à ceux des deux autres parois d'entretoise, lesquels sont alignés entre eux suivant des directions radiales à l'axe X-X. Cet agencement est préférable lorsque chaque paroi d'entretoise est considérée comme souple, ce qui est le cas en l'espèce. Si au contraire elle présente des dimensions, notamment une épaisseur, permettant de la considérer comme rigide, les orifices des trois parois d'entretoise peuvent être disposés en coïncidence. Dans ces conditions, chaque orifice de l'une des parois est aligné avec un orifice de chacune des autres parois suivant une direction radiale à l'axe.

La paroi d'entretoise 44c est à plus grande distance de l'axe que les deux autres. Comme on le voit sur la figure 4, elle présente des orifices inférieurs 54 qui s'étendent dans une partie inférieure de la paroi et dans la seule moitié gauche de la paroi par référence à l'axe. En d'autres termes, ils se trouvent dans le quadrant inférieur gauche. Ces deux orifices n'ont pas d'équivalent ou de pendant dans le quadrant inférieur droit, c'est-à-dire dans la moitié droite de la couronne. Ces deux orifices constituent donc des orifices supplémentaires sur cette paroi. Ils servent à éviter les projections d'air huilé.

On peut donner aux parois tubulaires et aux parois d'entretoise une épaisseur minimale de l'ordre de 1,5 mm pour des pièces de grande dimension afin d'éviter des déformations.

Le diamètre des orifices peut varier d'une machine à l'autre en fonction des spécifications de ventilation et de refroidissement. Il en est de même pour leur agencement et leur répartition. Le diamètre, le nombre et la disposition des orifices peuvent être différents d'une paroi d'entretoise à l'autre de la même machine. Les orifices sont disposés de préférence dans la partie haute de la couronne.

La réalisation de la couronne 30 a lieu par fabrication additive (ou impression 3D), dans le présent exemple selon la technique dite de fusion par faisceau laser (ou laser beam melting (LBM) en anglais), connue en elle-même.

Conformément au procédé de l'invention, dans le présent mode de mise en œuvre de ce procédé, on construit la couronne 30 par disposition de couches successives de poudre, chaque couche étant fondue de façon sélective par le rayon laser avant la disposition de la couche suivante. Les couches correspondent à des sections successives de la couronne 30 dans des plans perpendiculaires à l'axe X-X, les couches étant disposées en commençant par la couche située la plus en arrière (ou en aval), c'est-à-dire à droite sur la figure 3. Cela permet de construire le support de chaque paroi tubulaire, formé en général par une paroi d'entretoise, avant de construire celle-ci.

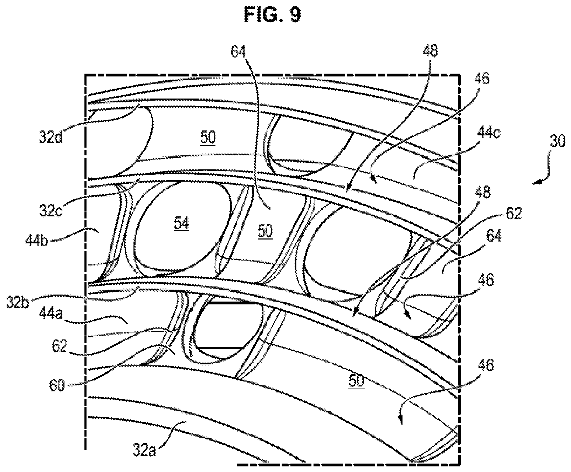

Ainsi pour chaque paroi d'entretoise tronconique 44a-c, la construction de la paroi débute par la section la plus large du tronc de cône. On a illustré en détail à la figure 9 la construction d'une portion d'une des parois d'entretoise présentant un orifice 54.

La construction de cette paroi débute par la portion distale illustrée par la ligne 58. Mais peu après que cette construction a débuté, c'est la construction de l'autre portion, proximale, repérée par la ligne 56, qui démarre. Cette portion est construite en même temps que se construit la base. Comme la base a une épaisseur relativement grande, la construction de cette portion proximale peut se faire sans risque d'effondrement. Lorsque la construction des portions proximale et distale est suffisamment avancée, elles se rejoignent en partie médiane de la paroi d'entretoise à l'endroit indiqué par la flèche 60.

Si, par commodité de langage, on parle de la construction de chaque orifice 54, on voit donc que cette construction a lieu en débutant par les deux extrémités de l'orifice et s'achève en portion médiane de ce dernier.

Il en va de même pour tous les orifices lors de la réalisation de la pièce. En particulier, tous les orifices d'une même paroi d'entretoise se construisent simultanément.

Dans l'agencement de la figure 9, chaque paroi d'entretoise 44a-c présente autour de chaque orifice 54 un rebord 60 présentant sur tout le rebord une épaisseur supérieure à une épaisseur de la paroi d'entretoise à distance du rebord. En d'autres termes, les parois d'entretoise 44a-c présentent une surépaisseur locale 60 autour de chaque orifice 54. Chaque orifice est donc délimité par deux marches 62 qui forment chacune une transition entre la surépaisseur 60 contiguë à l'orifice et la zone 64 située entre deux surépaisseurs. Cette surépaisseur facilite la réalisation de l'orifice par fabrication additive et augmente la robustesse de la paroi autour de l'orifice.

On pourra apporter à l'invention de nombreuses modifications sans sortir du cadre de celle-ci.

On peut notamment modifier le nombre de parois tubulaires et de parois d'entretoise.

## Revendications

1. Couronne de ventilation (30) pour support (26) de palier de turbomachine d'aéronef (2), la couronne comprenant :
- au moins deux parois tubulaires (32a-d) s'étendant en regard l'une de l'autre, au moins l'une des parois tubulaires comportant une partie principale (40) et une base (42) présentant une épaisseur (e) plus grande qu'une épaisseur (f) de la partie principale, et
- au moins une paroi d'entretoise (44a-c) reliant les parois tubulaires,
la paroi d'entretoise présentant au moins un orifice (54) s'étendant dans la base (42),
**caractérisée en ce que** la paroi d'entretoise (44a-c) présente autour de l'orifice (54) un rebord (60) présentant sur tout le rebord une épaisseur supérieure à une épaisseur de la paroi d'entretoise à distance du rebord et entre les parois tubulaires.

2. Couronne selon la revendication précédente dans laquelle la base (42) présente au moins une face (46) à profil arrondi concave formant une transition d'une face (48, 52) de la paroi tubulaire (32a-d) à une face (50) de la paroi d'entretoise (44a-c).

3. Couronne selon l'une quelconque des revendications précédentes dans laquelle l'orifice (54) s'étend dans la base (42) des deux parois tubulaires.

4. Couronne selon l'une quelconque des revendications précédentes dans laquelle la paroi d'entretoise présente plusieurs orifices (54) s'étendant dans la base de la paroi tubulaire ou dans la base des deux parois tubulaires.

5. Couronne selon l'une quelconque des revendications précédentes dans laquelle les parois d'entretoise (44a-c) sont au moins au nombre de deux et chacune présente plusieurs orifices (54).

6. Couronne selon la revendication précédente dans laquelle les orifices (54) des parois d'entretoise sont disposés en quinconce.

7. Couronne selon la revendication 5 dans laquelle les orifices des parois d'entretoise sont disposés en coïncidence.

8. Couronne selon l'une quelconque des revendications précédentes dans laquelle les parois tubulaires (32a-d) sont au moins au nombre de quatre.

9. Couronne selon l'une quelconque des revendications précédentes dans laquelle,
les parois d'entretoise (44a-c) sont au moins au nombre de deux, et
l'une (42a) des parois d'entretoise étant à plus grande distance de l'axe (X-X) que l'autre paroi d'entretoise ou que les autres parois d'entretoise, des orifices inférieurs (54) parmi les orifices s'étendent dans une partie inférieure de la paroi d'entretoise la plus distante de l'axe, les orifices inférieurs se trouvant tous dans une seule parmi des moitiés gauche et droite de la paroi d'entretoise par référence à l'axe.

10. Turbomachine (2) d'aéronef comprenant une couronne (30) selon l'une quelconque des revendications précédentes.

11. Procédé de fabrication d'une couronne (30) selon l'une quelconque des revendications 1 à 11 par fabrication additive, notamment par fusion par faisceau laser.

## Patentansprüche

1. Belüftungsring (30) für Lagerträger (26) eines Flugzeug-Turbinentriebwerks (2), wobei der Ring umfasst:
- mindestens zwei einander zugewandte rohrförmige Wände (32a-d), wobei mindestens eine der rohrförmigen Wände einen Hauptteil (40) und eine Basis (42) aufweist, deren Dicke (e) größer ist als eine Dicke (f) des Hauptteils, und
- mindestens eine die rohrförmigen Wände verbindende Stegwand (44a-c),
wobei die Stegwand mindestens eine sich in die Basis (42) erstreckende Öffnung (54) aufweist,
**dadurch gekennzeichnet, dass** die Stegwand (44a-c) um die Öffnung (54) herum eine Kante (60) aufweist, die über die gesamte Kante eine Dicke aufweist, die größer ist als eine Dicke der Stegwand im Abstand von der Kante und zwischen den rohrförmigen Wänden.

2. Ring nach vorstehendem Anspruch, wobei die Basis (42) mindestens eine Fläche (46) mit konkavem, abgerundetem Profil aufweist, die einen Übergang von einer Fläche (48, 52) der rohrförmigen Wand (32a-d) zu einer Fläche (50) der Stegwand (44a-c) bildet.

3. Ring nach einem der vorstehenden Ansprüche, wobei sich die Öffnung (54) in die Basis (42) der beiden rohrförmigen Wände erstreckt.

4. Ring nach einem der vorstehenden Ansprüche, wobei die Stegwand mehrere Öffnungen (54) aufweist, die sich in die Basis der rohrförmigen Wand oder in die Basis der beiden rohrförmigen Wände erstrecken.

5. Ring nach einem der vorstehenden Ansprüche, wobei die Stegwände (44a-c) mindestens zwei an der Zahl sind und jeweils mehrere Öffnungen (54) aufweisen.

6. Ring nach vorstehendem Anspruch, wobei die Öffnungen (54) der Stegwände versetzt angeordnet sind.

7. Ring nach Anspruch 5, wobei die Öffnungen der Stegwände fluchtend angeordnet sind.

8. Ring nach einem der vorstehenden Ansprüche, wobei die rohrförmigen Wände (32a-d) mindestens vier an der Zahl sind.

9. Ring nach einem der vorstehenden Ansprüche, wobei
die Stegwände (44a-c) mindestens zwei an der Zahl sind, und
eine (42a) der Stegwände weiter von der Achse (X-X) entfernt ist als die andere Stegwand oder als die anderen Stegwände, wobei sich die unteren Öffnungen (54) der Öffnungen in einem unteren Teil der von der Achse am weitesten entfernten Stegwand erstrecken, wobei sich die unteren Öffnungen alle in einer einzigen von der linken und rechten Hälfte der Stegwand in Bezug auf die Achse befinden.

10. Flugzeug-Turbinentriebwerk (2), das einen Ring (30) nach einem der vorstehenden Ansprüche umfasst.

11. Verfahren zur Herstellung eines Rings (30) nach einem der Ansprüche 1 bis 11 durch additive Fertigung, insbesondere durch Laserstrahlschmelzen.

## Claims

1. Ventilation ring (30) for a bearing support (26) of an aircraft turbomachine (2), the ring comprising :
- at least two tubular walls (32a-d) extending opposite one another, at least one of the tubular walls comprising a main portion (40) and a base (42) having a thickness (e) greater than a thickness (f) of the main portion, and
- at least one spacer wall (44a-c) connecting the tubular walls,
the spacer wall having at least one hole (54) extending into the base (42),
**characterized in that** the spacer wall (44a-c) has a rim (60) around the orifice (54), the thickness of the rim being greater than a thickness of the spacer wall at a distance from the rim and between the tubular walls.

2. Ring according to the preceding claim wherein the base (42) has at least one face (46) with a concave rounded profile forming a transition from a face (48, 52) of the tubular wall (32a-d) to a face (50) of the spacer wall (44a-c).

3. Ring according to any one of the preceding claims wherein the hole (54) extends into the base (42) of the two tubular walls.

4. Ring according to any one of the preceding claims in which the spacer wall has a plurality of apertures (54) extending into the base of the tubular wall or into the base of both tubular walls.

5. Ring according to any one of the preceding claims in which the spacer walls (44a-c) are at least two in number and each has a plurality of holes (54).

6. Ring according to the preceding claim in which the holes (54) in the spacer walls are arranged in a staggered pattern.

7. Ring according to claim 5 in which the orifices of the spacer walls are arranged in coincidence.

8. Ring according to any one of the preceding claims in which the tubular walls (32a-d) are at least four in number.

9. Ring according to any one of the preceding claims wherein,
the spacer walls (44a-c) are at least two in number, and
one (42a) of the spacer walls being at a greater distance from the axis (X-X) than the other spacer wall or the other spacer walls, lower holes (54) among the holes extend into a lower portion of the spacer wall furthest from the axis, the lower holes all being in only one of the left and right halves of the spacer wall with reference to the axis.

10. Aircraft turbomachine (2) comprising a ring (30) according to any of the preceding claims.

11. Process for manufacturing a ring (30) according to any one of claims 1 to 11 by additive manufacturing, in particular by laser beam fusion.
